# EUROPÄISCHE PATENTANMELDUNG

(11) **EP 0 822 531 A1**
(43) Veröffentlichungstag der Anmeldung: **04.02.1998**
(21) Anmeldenummer: 97113177.6
(22) Anmeldetag: 31.07.1997
(51) Int. Cl.: G09B 23/30, G09B 23/28

(54) **Körpermodell für die Simulation chirurgischer Eingriffe an Knochen**

(30) Priorität: 14.11.1996 DE 19647172; 31.07.1996 DE 29613274 U
(71) Anmelder: Bohne, Thomas, 37085 Göttingen (DE)
(72) Erfinder: Bohne, Thomas, 37085 Göttingen (DE)
(74) Vertreter: Patentanwälte Rehberg + Hüppe

(57) **Zusammenfassung**

Ein Phantom ist für die Simulation von chirurgischen Eingriffen an Knochen, insbesondere an Kieferknochen beim Einsetzen von Implantaten, vorgesehen. Es weist einen die Kompakta des Knochens nachbildenden Grundkörper (6) und einen die Spongiosa des Knochens nachbildenden, in dem Grundkörper (6) angeordneten Kern (1) auf. Der Kern (1) ist aus einem harten Schaum ausgebildet.

## Beschreibung

Die Erfindung bezieht sich auf ein Phantom für die Simulation von chirurgischen Eingriffen an Knochen, insbesondere an Kieferknochen beim Einsetzen von Implantaten, mit einem die Kompakta des Knochens nachbildenden Grundkörper und mit einem die Spongiosa des Knochens nachbildenden, in dem Grundkörper angeordneten Kern. Weiterhin betrifft die Erfindung ein Verfahren zur Herstellung eines solchen Phantoms.

Unterkieferphantome der eingangs beschriebenen Art dienen beispielsweise zur Aus- und Weiterbildung von Zahnärzten im Einsetzen von Implantaten, die im Unterkieferknochen verankert werden sollen. Dabei erfolgt eine mechanische Bearbeitung des Phantoms, die möglichst realitätsnah sein muß, damit sich ein auf die Praxis übertragbarer Lernerfolg einstellt.

Es sind Phantome der eingangs beschriebenen Art bekannt, bei denen es sich jedoch nicht um Unterkiefer- oder Oberkieferphantome handelt.

Bei bekannten Unterkieferphantomen wird der Unterkieferknochen durch einen Formkörper aus homogenem Kunststoff nachgebildet, so daß sich keine Unterschiede zwischen der Kompakta des Knochens und der Spongiosa des Knochens ergeben. So finden beispielsweise die in der Realität auftretenden stark unterschiedlichen Bearbeitungswiderstände der Kompakta und der Spongiosa keine Berücksichtigung. Weiterhin fehlt es an der Wiedergabe wichtiger anatomischer Strukturen, wie des Nervus alveolaris inferior, des Nervus mentalis, des Nervus infraorbitalis, des Canalis mandibularis und des Foramen mentale.

Darüberhinaus ist es weder möglich, eine sinnvolle Röntgendiagnostik des Phantoms vor oder nach der Implatation durchzuführen, noch ist eine den Unterkieferknochen in der Realität umgebende Schleimhaut nachgebildet. Letztlich sind keine Möglichkeiten vorhanden, das Unterkieferphantom in einem Phantomkopf zu verwenden, so daß insgesamt bei Verwendung dieser bekannten Unterkieferphantome keine realitätsnahen Ausbildungsmöglichkeiten gegeben sind.

Bei einem ebenfalls bekannten, weiterentwickelten Unterkieferphantom (Implantmodell A-J der Firma Frasaco) ist die den Unterkieferknochen umgebende Schleimhaut in nahtfähiger Weise nachgebildet. Weiterhin sind Möglichkeiten zur Anwendung des Unterkieferphantoms in einem Phantomkopf geschaffen, und für die Planung einer Implantation werden fiktive Röntgenbilder von dem Unterkieferphantom mitgeliefert. Eine Röntgendiagnostik unmittelbar an dem Unterkieferphantom ist jedoch nicht möglich. Ebenso fehlt es weiterhin an der realitätsnahen Nachbildung der nochenstrukturen des Kieferknochens mit Kompakta und Spongiosa.

Der Erfindung liegt die Aufgabe zugrunde, ein Phantom für die Simulation von chirurgischen Eingriffen am Knochen, insbesondere ein Unterkieferphantom, aufzuzeigen, dessen Bearbeitungseigenschaften der Realität genau nachgebildet sind. Weiterhin soll ein geeigneter Weg zur Herstellung eines solchen Phantoms aufgezeigt werden.

Erfindungsgemäß wird diese Aufgabe bei dem Phantom dadurch gelöst, daß der die Spongiosa des Knochens nachbildende, in dem Grundkörper angeordnete Kern aus einem harten Schaum ausgebildet ist. Dabei bedeutet harter Schaum, daß der Kern kleine Gasblasen in einem harten Kunststoff einschließt. Die Gasblasen sind vorzugsweise geschlossen, damit der Kern in den Grundkörper integriert werden kann, ohne daß irgendwelche Substanzen in unerwünschter Weise in die Gasblasen, d. h. den Kern, eindringen. Ein solcher harter Schaum besitzt in realitätsnaher Weise einen deutlich geringeren Bearbeitungswiderstand als der aus massivem Kunststoff ausgebildete Grundkörper. Dies ist für die praxisnahe Ausbildung im Einsetzen von Implantaten von erheblichem Vorteil.

Vorzugsweise weist der Kern die gleiche chemische Zusammensetzung auf wie der Grundkörper. Damit ist eine vollständige Verbindung des Kerns mit dem Grundkörper bei der Herstellung des Phantoms in einfacher Weise möglich. Der Kern und der Grundkörper unterscheiden sich in diesem Fall im wesentlichen nur durch die zusätzlichen Gasblasen in dem Kern.

Der Kern kann aus einem Kunststoff ausgebildet sein, dem ein Röntgenkontrastmittel zugesetzt ist. Entsprechend kann auch dem den Grundkörper ausbildenden Kunststoff ein Röntgenkontrastmittel zugesetzt sein. Hiermit wird eine Röntgendiagnostik an dem Phantom sowohl vor als auch nach dem Einsetzen von Implantaten bzw. der Durchführung anderer chirurgischer Eingriffe möglich. Das Röntgenkontrastmittel kann für den Kern und für den Grundkörper in unterschiedlichen Konzentrationen bezogen auf den Kunststoff eingesetzt werden. Unterschiedliche Röntgenkontraste ergeben sich aber bereits durch die geringere Dichte des Kerns aufgrund der Gasblasen. Als Röntgenkontrastmittel kommen alle mit dem eingesetzten Kunststoff mischbaren oder darin suspendierbaren Stoffe in Frage, die den Röntgenkontrast des Kunststoffs beeinflussen können, beispielsweise Gips oder auch üblicherweise zur Injektion in einen lebenden menschlichen Körper vorgesehene Röntgenkontrastmittel.

Der Kern kann ein unter Vakuum ausgehärteter Formkörper sein. Die Aushärtung unter Vakuum führt zu der gewünschten Ausbildung von Gasblasen in dem Kunststoff, der bei Aushärtung unter Normaldruck oder Überdruck massive Formkörper, beispielsweise für den Grundkörper, ausbildet. Dies ist auf das Verdampfen geringer Anteile des Kunststoffs unter Einwirkung des Vakuums, d. h. eines signifikanten Unterdrucks gegenüber dem Normaldruck, zurückzuführen.

Der Grundkörper ist vorzugsweise ein in zwei Schritten gegossener Formkörper. In einem ersten Schritt wird der Grundkörper bis zur Höhe des Kerns ausgebildet. Dann wird der Kern auf den Teil des Grundkörpers aufgelegt, und anschließend wird der Grundkörper vervollständigt. Dabei ergibt sich ein geschlossener Grundkörper, der fest mit dem Kern verbunden ist.

Vor dem Anordnen des Kerns auf dem im ersten Schritt gegossenen Teil des Grundkörpers kann ein durch den Knochen verlaufender Nervenkanal mit einem Röntgenkontrastmittel markiert werden. Dieser Nervenkanal kann dabei an dem Phantom tatsächlich ausgespart sein oder nur aus der Markierung bestehen. Wenn der Kanal tatsächlich ausgespart ist, kann auch ein röntgenopaker Faden in den Kanal eingelegt werden, um den Nerv nachzubilden. Ein röntgenopaker Faden ist auch geeignet, einen nicht nur durch, sondern auch an dem Knochen verlaufenden Nerv bei dem Phantom nachzubilden, so daß er bei einer Röntgendiagnostik an dem Phantom sichtbar wird. Die Beschädigung von Nerven stellt in der Realität ein ernsthaftes Problem dar, so daß die realistische Ausbildung in diesem Bereich besonders wichtig ist. Bei einem Unterkieferphantom geht es konkret um den Nervus alveolaris inferior, der im Unterkieferknochen durch den Canalis mandibularis verläuft und nach dem Austreten aus dem Foramen mentalis als Nervus mentalis bezeichnet wird. Bei einem Oberkieferphantom ist die Nachbildung des Nervus infraorbitalis von Interesse.

Eine den Knochen umgebende Schleimhaut kann bei dem neuen Phantom durch einen den Grundkörper umgebenden Mantel nachgebildet sein. Hierdurch ist die Nachbildung der Schleimhaut in relativ einfacher Weise möglich. Um dennoch eine Nahtfähigkeit der nachgebildeten Schleimhaut zu erreichen, kann in den Mantel aus Silikon eine Gaze eingebettet sein. Diese Gaze ist möglichst engmaschig um eine realitätsnahe Nähbarkeit zu erreichen. Mit der Gaze kann auch der Periost eines Unter- oder Oberkieferknochens nachgebildet. Dazu ist die Gaze aber weniger in dem Mantel aus Silikon, sondern vielmer zwischen diesem und dem Grundkörper anzuordnen, wobei sie sowohl von dem Grundkörper als auch dem Mantel appreparierbar ist.

Zur Lagedefinition der Gaze ist diese vor dem Angießen des Silikonmantels an dem Knochen zu befestigen. Dies ist in einfachster Weise möglich, wenn die Gaze schlauchförmig ausgebildet und auf den Knochen aufgezogen ist. Ansonsten kann die Gaze aber auch punktuell an den Knochen angeklebt werden.

In einer Weiterbildung der Erfindung für ein Oberkieferphantom ist auf einer Innenoberfläche einer Ausnehmung in dem Grundkörper eine Kautschukschicht vorgesehen. Diese Kautschukschicht bildet eine Knochenhöhlenschleimhaut, d. h. hier, eine Kiefernhöhlenschleimhaut aus. Es ist möglich, die Kautschukschicht wie eine reale Kiefernhöhlenschleimhaut zu präparieren, um an dem Oberkieferphantom eine Sinusbodenelevation, einen Sinuslift oder eine Sinuskopie durchzuführen. Auch hierbei handelt es sich um wichtige Techniken im Zusammenhang mit dem Einsetzen von Implantaten in einen Kieferknochen.

Vorzugsweise weist das Phantom eine lösbar mit dem Grundkörper verbundene Trägerplatte auf, die beispielsweise die Anwendung eines erfindungsgemäßen Unterkieferphantoms in einem Phantomkopf ermöglicht. Lösbar sollte die Trägerplatte für den Grundkörper sein, damit sie für eine Röntgendiagnostik entfernt werden kann. Bei einer Röntgendiagnostik würde die Trägerplatte zu unrealistischen und die Diagnostik behindernden Schattenwürfen führen.

Zur lösbaren Befestigung der Trägerplatte an dem Grundkörper können an dem Grundkörper Einschraubhülsen ausgebildet sein, in die Befestigungsschrauben für die Trägerplatte einschraubbar sind. Dabei muß es sich nicht um Gewindehülsen handeln. Vielmehr finden bevorzugt selbstschneidende Befestigungsschrauben Verwendung, die in einfache Lochhülsen in dem Grundkörper eingedreht werden. Die Mittel zur Befestigung der Trägerplatte an dem Grundkörper können nach Entfernen der Trägerplatte verwendet werden, um das Phantom in einer Röntgenvorrichtung zu fixieren.

Das neue Phantom erlaubt neben der Ausbildung im reinen Einsetzen von Implantaten auch das Einüben spezieller Techniken der Kieferchirurgie. So können Membrantechniken, beispielsweise die GBR- (guided bone regeneration) Technik, Augmentationstechniken, beispielsweise die autologe Knochentransplantation, das bone splitting zur lokalen Kieferverbreiterung und auch die Transposition der Nervus alveolaris inferior oder des Nervus infraorbitalis an dem neuen Phantom realitätsnah simuliert werden. Bezüglich der anwendbaren Röntgendiagnostik ist das Phantom nicht nur für Standardverfahren, wie die Orthopantomographie, sondern auch für computertomographische Verfahren, wie das Denta-Scan-Verfahren, geeignet.

Bei dem Verfahren wird die erfindungsgemäße Aufgabe dadurch gelöst, daß der Kern aus einem Präpolymer unter Vakuum ausgehärtet wird, wobei das Präpolymer die gleiche chemische Zusammensetzung aufweist wie ein Präpolymer für den Grundkörper, der unter einem höheren Druck ausgehärtet wird. Wie bereits erläutert wurde, führt das Aushärten des Kerns unter Unterduck bei einer dem kompakten Grundkörper gleichenden chemischen Zusammensetzung zu der gewünschten porösen Struktur.

Eine vorteilhafte Weiterbildung des Verfahrens betrifft die zweischrittige Ausbildung des Grundkörpers, die ebenfalls bereits erläutert wurde.

Die Erfindung wird im Folgenden anhand von Ausführungsbeispielen näher erläutert und beschrieben. Dabei zeigt:
- Fig. 1: einen Kern für die Nachbildung der Spongiosa eines Unterkieferknochens mit Anguß in der Seitenansicht,
- Fig. 2: den Kern gemäß Fig. 1 in einer Ansicht von unten,
- Fig. 3: einen Teil eines Grundkörpers für die Nachbildung der Kompakta eines Unterkieferknochens in der Seitenansicht,
- Fig. 4: eine Seitenansicht des gesamten Grundkörpers mit eingebettetem Kern gemäß den Fig. 1 und 2,
- Fig. 5: eine Ansicht von oben auf ein Unterkieferphantom mit dem Grundkörper und dem Kern gemäß den Fig. 1 bis 4,
- Fig. 6: einen ersten Querschnitt durch das Phantom gemäß Fig. 5,
- Fig. 7: einen zweiten Querschnitt durch das Phantom gemäß Fig. 5,
- Fig. 8: eine Ansicht von oben auf ein Oberkieferphantom und
- Fig. 9: einen Querschnitt durch das Phantom gemäß Fig. 8.

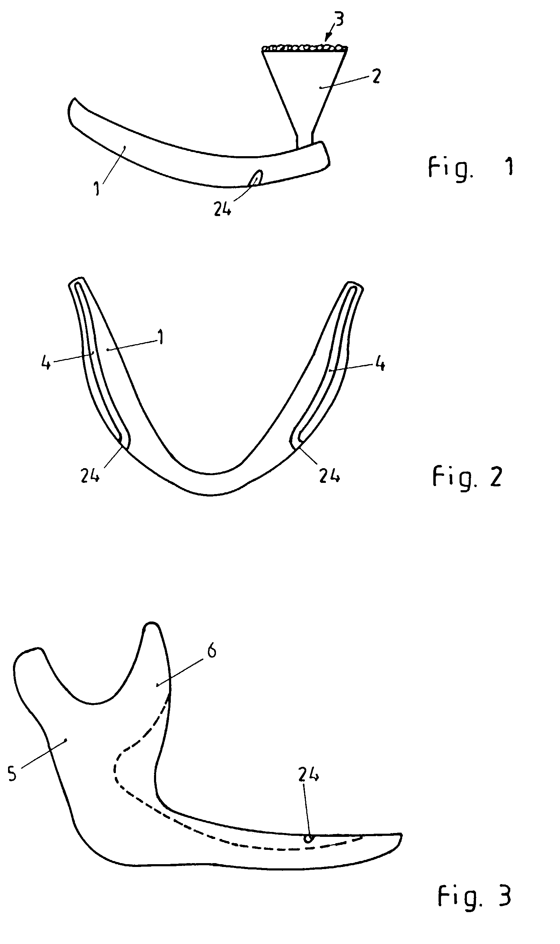

Der in Fig. 1 wiedergegebene Kern 1 dient zur Nachbildung der Spongiosa eines Knochens bei einem Phantom für die Simulation von chirurgischen Eingriffen an dem Knochen. Der Kern 1 besteht aus einem harten Schaum mit geschlossener Oberfläche, d. h. aus einem kleine Gasblasen einschließenden, harten Kunststoff. Der Kern 1 ist unter Vakuum, d. h. unter Unterdruck, in einer Gußform ausgehärtet worden. Hiervon ist noch der Anguß 2 zurückgeblieben, an dessen Oberseite 3 die blasige Struktur des harten Schaums zumindest ansatzweise ersichtlich ist. Der Anguß 2 wird für die Ausbildung des Phantoms unter Verwendung des Kerns 1 entfernt und ist in Fig. 2 bereits nicht mehr dargestellt.

Fig. 2 zeigt den Kern 1 gemäß Fig. 1 von unten. Dabei wird der Verlauf des sich in der Spongiosa des Knochens erstreckenden cranialen Teils des Canalis mandibularis 4 ersichtlich. Der den Kern 1 ausbildende Kunststoff ist mit einem Röntgenkontrastmittel versetzt. Der craniale Canalis mandibularis ist zusätzlich derart mit einem Röntgenkontrastmittel markiert, daß er in einem Röntgenbild des Phantoms gegenüber dem Kern 1 deutlich hervorgehoben ist.

Der Kern 1 gemäß den Fig. 1 und 2 wird auf einem zuvor hergestellten basalen Teil 5 eines Grundkörpers 6 aufgelegt. Der basale Teil 5 des Grundkörpers 6 bildet den unteren Bereich eines Kieferknochens sowie die aufstrebenden Kieferäste nach. Ebenso ist an ihm, was aus Fig. 3 nicht ersichtlich ist, der basale Canalis mandibularis ausgebildet.

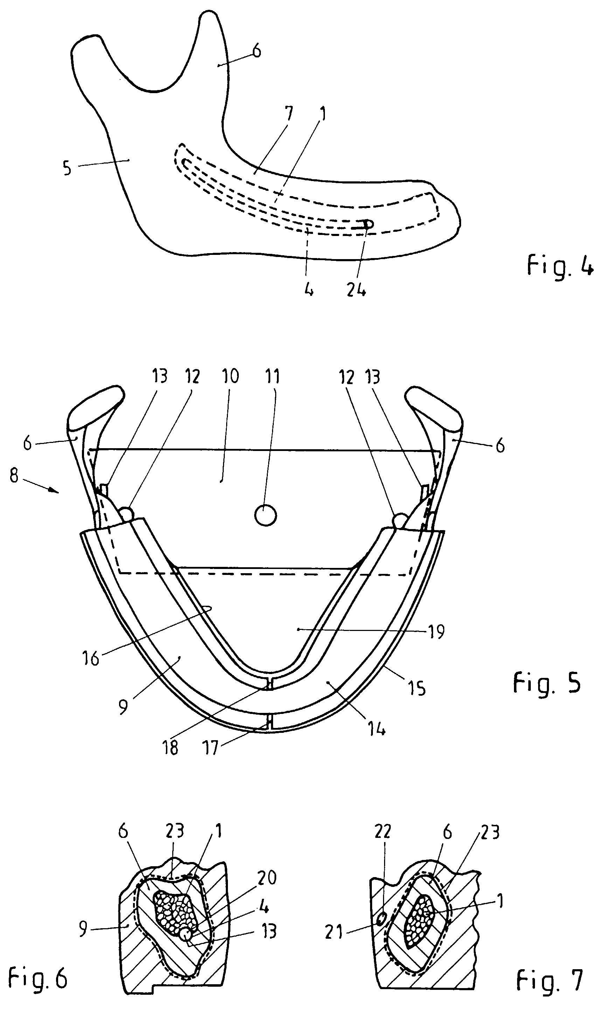

Mit dem aufgelegten Kern 1 wird der Formkörper 6 durch Ergänzen eines cranialen Teils 7 fertiggestellt, so daß der Formkörper 6, wie aus Fig. 4 ersichtlich, die gesamten Umrisse eines Unterkieferknochens nachbildet. Dabei entspricht der Formkörper 6 der Kompakta und der Kern 1 der Spongiosa des Unterkieferknochens, die unterschiedliche Bearbeitungswiderstände bei der Simulation von chirurgischen Eingriffen an dem Unterkieferknochen aufweisen.

Der Kunststoff, der den Grundkörper 6 ausbildet, ist wie der Kunststoff des Kerns 1 mit einem Röntgenkontrastmittel versetzt. Tatsächlich handelt es sich um denselben Kunststoff mit demselben Zusatz an Röntgenkontrastmittel. Durch die Verwendung desselben Kunststoffs für den Kern 1 und den Formkörper 6 wird eine gute Verbindung dieser beiden Teile erreicht. Im Bereich des Formkörpers 6 weist der Kunststoff jedoch eine kompakte Struktur auf. Dies wird durch Aushärten des Kunststoffs unter Überdruck erreicht.

Fig. 5 zeigt ein Phantom 8 mit dem den Kern 1 einschließenden Grundkörper 6 gemäß Fig. 4. Dabei ist zusätzlich ein Mantel 9 aus Silikon zur Nachbildung einer den Unterkieferknochen umgebenden Schleimhaut vorgesehen. Weiterhin ist der Grundkörper 6 auf einer Trägerplatte 10 befestigt, die den Einbau des Phantoms 8 in einen hier nicht dargestellten Phantomkopf ermöglicht. Die Trägerplatte 10 weist eine Gewindebohrung 11 zur Befestigung in dem Phantomkopf auf. Ihrerseits ist die Trägerplatte 10 über in Fig. 5 nicht sichtbare Schrauben an dem Grundkörper 6 befestigt, die dort in Einschraubhülsen 12 eingreifen. Der rückwärtige Austrittspunkt des Nervus alveolaris inferior ist durch einen dort eingeschobenen röntgenopaken Silikon-Loop 13 markiert. An der Oberseite des die Schleimhaut nachbildenden Mantels 9 ist der Kieferkamm 14, ein äußerer Ansatz 15 zur Mundschleimhaut und ein innerer Ansatz 16 zur Zunge erkennbar, ebenso wie der Verlauf von Bändern 17 und 18 zur Lippenmuskulatur bzw. zur Zunge. Die Zunge selbst ist nicht nachgebildet, der Formkörper 9 ist aber zwischen den beiden Kieferästen im Bereich 19 massiv ausgebildet, so daß bei der Röntgendiagnose ein Röntgenkontrast erreicht wird, wie er im Realfall mit Zunge auftritt. Für die Röntgendiagnose ist die Trägerplatte 10 von dem Phantom 8 zu entfernen, damit sie keinen unerwünschten Schatten in der Röntgenaufnahme ausbildet.

Die Fig. 6 und 7 geben Querschnitte durch den Formkörper 6 mit dem Kern 1 und dem umgebenden Mantel 9 aus Silikon wieder.

Hierbei wird aus Fig. 6 der Verlauf des durch einen röntgenopaken Silikon-Loop 20 markierten Nervus alveolaris inferior 13 im Canalis mandibularis 4 unterhalb des Kerns 1, aber innerhalb des Formkörpers 6 deutlich. Demgegenüber zeigt Fig. 7 einen Querschnitt im vorderen Bereich des Kieferknochens, in den der Nervus mentalis 21 außerhalb des Formkörpers 6 verläuft. Hier ist der Nervus mentalis 21 durch einen röntgenopaken Silikon-Loop 22 bezüglich seiner Lage markiert. Um den Formkörper 6 verläuft eine engmaschige Gaze 23, was sowohl aus Fig. 6 als auch Fig. 7 hervorgeht. Diese Gaze 23 ist schlauchförmig ausgebildet und über den von dem Mantel 9 umgebenen Teil des Formkörpers 6 aufgezogen. Die Gaze 23 stellt die Nahtfähigkeit des die Schleimhaut nachbildenden Mantels 9 aus Silikon sicher. Sie kann auch zur Nachbildung eines Periost verwendet werden.

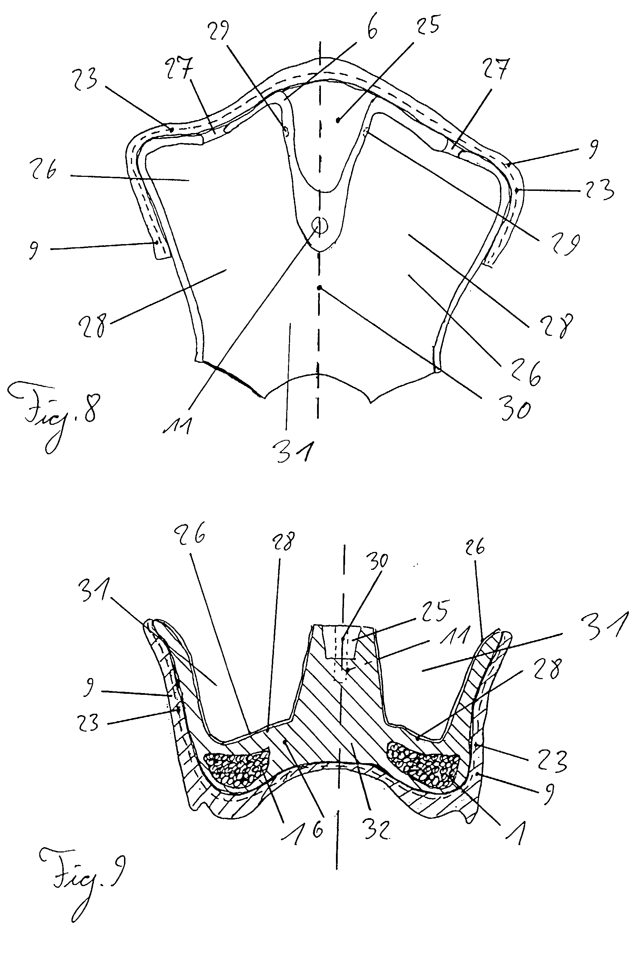

Das in den Fig. 8 und 9 dargestellte Oberkieferphantom entspricht in seinem grundsätzlichen Aufbau dem Unterkieferphantom gemäß Fig. 5. Es ist auch in grundsätzlich derselben Weise herstellbar wie das Unterkieferphantom 5. Im Folgenden wird daher nur auf die Besonderheiten des Oberkieferphantoms näher eingegangen. Als wesentlicher Unterschied ist hier eine zusätzliche Kautschukschicht 26 vorgesehen, die den Grund der nachgebildeten Kiefernhöhlen 31, d. h. den rechten und den linken Sinus maxillaris, bedeckt. Diese Kautschukschicht kann wie eine Kiefernhöhlenschleimhaut präpariert werden und erlaubt so das Einüben einer Sinusbodenelevation oder einer Sinuskopie an dem Oberkieferphantom gemäß den Fig. 8 und 9. Weiterhin sind bei dem Phantom gemäß den Fig. 8 und 9 die anatomischen Besonderheiten eines realen Oberkiefers nachgebildet. Hierbei handelt es sich um die Nasenhöhle 25, das rechte und das linke Foramen infraorbitale 27 und um das rechte und das linke Ostium naturale 29. Dabei können auch hier nicht dargestellte Kieferhöhlensepten nachgebildet sein, um tatsächlich auftretende Problemfälle beim Einüben beispielsweise des Sinuslifts zu simulieren. Letztlich ist bei dem Oberkieferphantom im Gegensatz zu dem Unterkieferphantom keine separate Trägerplatte 10 vorgesehen. Vielmehr befindet sich die Gewindebohrung 11 direkt in dem Formkörper 6 oberhalb der Nachbildung des knöchernden Gaumens 32.

Im Folgenden werden konkrete Herstellungsbeispiele für die Herstellung des Phantoms 8 gemäß Fig. 5 bzw. Fig. 8 gegeben.

### Beispiel 1, Herstellung des Kerns

Zur Herstellung des Kerns 1 wird zunächst ein Kunststoff gemäß der Vorschrift des Herstellers angemischt. Bei dem Kunststoff kann es sich beispielsweise um ein Schnellgießharz handeln, wie es von der Firma Hot-Point unter dem Produktnamen Biresin G 27 angeboten wird und bei dem es sich um ein üblicherweise zur Herstellung von Modellbasisplatten verwendetes Diphenylmethan-4,4-diisocyanat handelt. Ebenso kann auch ein Polymethacrylsäureester verwendet werden, wie er von der Firma Zahnfabrik Werchan unter dem Produktnamen Combipress N vertrieben wird und üblicherweise als kaltpolymerisierender Prothesenbasis-Kunststoff eingesetzt wird. In den Kunststoff wird eine definierte Menge eines Röntgenkontrastmittels eingemischt. Bei dem Röntgenkontrastmittel kann es sich um Gips handeln, wie er beispielsweise von der Firma Ernst Hinrichs unter dem Produktnamen Non plus ultra vertrieben wird und der als Arbeitsmodellwerkstoff Verwendung findet. Es kann auch ein Röntgenkontrastmittel Verwendung finden, das von der Firma Byk Gulden unter der Bezeichnung Lipiodol-Ultrafluid vertrieben wird. Lipiodol enthält Fettsäureäthylester des jodierten Oleum Papaveris und Natriumsulfit und findet typischerweise als ölige Lösung zur Injektion und Instillation bei der Lymphographie und Fistulographie Verwendung. Ebenso ist die Verwendung von reinem, pulverförmigen Bariumsulfat als Röntgenkontrastmittel möglich.

Der mit dem Röntgenkontrastmittel versetzte Kunststoff wird in eine individuell hergestellte Silikonform eingegossen. Anschließend erfolgt das Aushärten des Kunststoff unter Vakuum. Hierdurch wird der Siedepunkt des Kunststoffs bzw. seiner Bestandteile herabgesetzt und eine blasige Struktur in dem ausgehärteten Kunststoff hervorgerufen. Der ausgehärtete Kunststoff wird als Kern 1 entformt. Der Anguß 2 wird abgeschnitten und verschliffen.

### Beispiel 2, Herstellung des basalen Teils 5 des Formkörpers 6

Der Teil 5 des Formkörpers 6 wird in derselben Weise wie der Kern 1 hergestellt, nur wird statt Vakuum, d. h. statt Unterdruck, Überdruck beim Aushärten des Kunststoffs angewandt, so daß dieser im ausgehärteten Zustand kompakt ist.

### Beispiel 3, Markierung des Canalis mandibularis (nur bei dem Unterkieferphantom gemäß Fig. 5)

Bei der Herstellung des Kerns 1 wurde der craniale Anteil des Canalis mandibularis bei der Ausbildung des basalen Bereichs des Kerns berücksichtigt. Ebenso wurde bei der Herstellung des basalen Teils 5 des Formkörpers 6 die basale Hälfte des Canalis mandibularis in Form einer Pille angelegt. Beide Rillen werden mit einem Röntgenkontrastmittel eingestrichen und ergeben nach dem Zusammenfügen des Teils 5 und des Kerns 1 den röntgenologischen Canalis mandibularis. Als Röntgenkontrastmittel kann Bariumsulfat verwendet werden, wie es unter dem Produktnamen Microtrast Paste handelsüblich ist und typischerweise zur Darstellung des Ösophagus, der Schluckmechanismen, der Peristaltik sowie der Herzgröße und Konfiguration Verwendung findet.

### Beispiel 4, Zusammenfügen des Kerns 1 und des basalen Teils 5 des Formkörpers 6

Der Kern 1 und der basale Teil 5 des Formkörpers 6 sind vorzugsweise nur an einer definierten Relativposition zusammenfügbar. Diese Position kann auch durch Einlegen des Silikon-Loops 20 in den basalen Anteil des Canalis mandibularis und Auflegen des Kerns in einer solchen Weise erfolgen, daß der Silikon-Loop auch in dem cranialen Anteil des Canalis mandibularis in dem Kern 1 liegt. Vorzugsweise werden der Kern 1 und der Teil 5 des Formkörpers 6 miteinander verklebt, um diese Relativlage zu fixieren.

### Beispiel 5, Fertigstellen des Formkörpers 6

Der Kern 1 wird mit dem basalen Teil 5 des Formkörpers 6 in eine individuelle Silikonform eingebracht. Anschließend wird mit Röntgenkontrastmittel versetzter Kunststoff wie für die Herstellung des Kerns 1 gemäß Beispiel 1 in die Silikonform eingegossen und der Kunststoff unter Überdruck ausgehärtet. Danach wird der Formkörper 6 entformt und die Gußkanäle werden entfernt und verschliffen.

### Beispiel 6, Fixieren des Nervus mentalis (nur bei dem Unterkieferphantom gemäß Fig. 5)

Zur Nachbildung des Nervus mentalis wird ein ca. 2 cm langer Silikon-Loop 22 jeweils im Bereich des rechten und linken Foramen mentale 24 fixiert. Bei dem Silikon-Loop kann es sich um ein Produkt der Firma Serag-Wiessner Naila handeln, das unter dem Produktnamen Silikon-Loop, gelb vertrieben wird und das als steriler Anschlingfaden vorgesehen ist.

### Beispiel 7, Herstellung des Mantels 9 zur Nachbildung der Schleimhaut

Eine engmaschige Gaze 23, beispielsweise wie sie unter dem Produktnamen tgl von der Firma Lohmann als Schlauchverband, weiß angeboten wird, wird über den Formkörper 6 gezogen bzw. an diesem fixiert. Die Silikon-Loops zur Darstellung des Nervus mentalis auf der rechten und linken Seite des Formkörpers 6 werden durch die Gaze gefädelt und durch eine Naht auf der Gaze fixiert (nur bei dem Unterkieferphantom gemäß Fig. 5). Anschließend wird der Formkörper 6 mit der Gaze in eine individuelle Silikonform zur Herstellung des Formkörpers aus Silikon eingebracht. Die Silikonform wird im voraus mit einer Silikonisolierung behandelt, während insbesondere der Formkörper 6, aber auch die Gaze 23 und die Silikon-Loops 22 mit einem Silikon-Kontaktmittel zur besseren Anhaftung der Mantels 9 behandelt werden könen. Anschließend wird nach Anweisung des Herstellers angerührtes Silikon in die Form eingegossen und unter Überdruck ausgehärtet. Abschließend wird der MAntel 9 aus Silikon entformt, und die Gußkanäle werden mit einem Skalpell entfernt. Bei dem Silikon kann es sich um ein Produkt der Firma DT handeln, das unter dem Produktnamen Finosil H vertrieben wird und bei dem es sich um eine kalthärtende Dubliermasse zur Modelldublizierung handelt.

### Beispiel 8, Fertigstellung des Phantoms (nur bei dem Unterkieferphantom gemäß Fig. 5)

Im Anschluß an Beispiel 7 wird die Trägerplatte 10 an den Grundkörper 6 angeschraubt, nachdem in die Trägerplatte 10 die Gewindebohrung 11 eingebracht wurde. Die Gewindebohrung 11 ist auf das Gewinde des zu verwendenden Phantomkopfs abgestimmt. Zur Röntgendiagnostik kann der Grundkörper über die Gewindepohrungen 11 nach Entfernen der Trägerplatte in einer Röntgenvorrichtung fixiert werden.

### Beispiel 9, Aufbringung der Kautschukschicht 26 zur Nachbildung der Kiefernhöhlenschleimhaut (nur bei dem Oberkieferphantom gemäß Fig. 8)

Auf den Formkörper 6 wird flüssiger Kautschuk aufgepinselt und bei ca. 50°C für ca. 10 min. vulkanisiert. Dieser Vorgang wird dreimal wiederholt. Als Kautschuk kann ein Produkt verwendet werden, das unter dem Handelsnamen Plastilate von der Firma Hobbytime Bastel-System GmbH vertrieben wird und das üblicherweise im Modellbau- und Hobbybereich zur Herstellung von nahtlosen Schlauchformen Verwendung findet.

### Beispiel 10, Fertigstellung des Phantoms (nur bei dem Oberkieferphantom gemäß Fig. 8)

Im Anschluß an Beispiel 9 wird die Gewindebohrung 11 in den Formkörper 6 eingebracht. Die Gewindebohrung 11 ist auf das Gewinde des zu verwendenden Phantomkopfs abgestimmt und kann auch zum Fixieren des Phantoms in einer Röntgenvorrichtung verwendet werden.

In beiden Ausführungsformen erlaubt das neue Phantom 8 ein realitätsnahes Einsetzen von Implantaten und die realitätsnahe Ausführung aller Vor- und Nebenarbeiten einschließlich prä- und postchirurgischer Eingriffe, wobei jeweils vorher und hinterher eine Röntgendiagnostik in eben der Weise durchgeführt werden kann, wie sie auch im Realfall üblich ist.

### BEZUGSZEICHENLISTE

- 1 -: Kern
- 2 -: Anguß
- 3 -: Oberseite
- 4 -: Canalis mandibularis
- 5 -: Teil des Formkörpers
- 6 -: Formkörper
- 7 -: Teil des Formkörpers
- 8 -: Phantom
- 9 -: Formkörper
- 10 -: Trägerplatte
- 11 -: Gewindebohrung
- 12 -: Einschraubhülse
- 13 -: Nervus alveolaris inferior
- 14 -: Kieferkamm
- 15 -: Anschluß
- 16 -: Anschluß
- 17 -: Band
- 18 -: Band
- 19 -: Bereich
- 20 -: Silikon-Loop
- 21 -: Nervus mentalis
- 22 -: Silikon-Loop
- 23 -: Gaze
- 24 -: Foramen mentale
- 25 -: Nasenhöhle
- 26 -: Kautschukschicht
- 27 -: Foramen infraorbitale
- 28 -: Sinus maxillaris
- 29 -: Ostium naturale
- 30 -: Mittelebene
- 31 -: Kiefernhöhle
- 32 -: knöcherner Gaumen

## Patentansprüche

1. Phantom für die Simulation von chirurgischen Eingriffen an Knochen, insbesondere an Kieferknochen beim Einsetzen von Implantaten, mit einem die Kompakta des Knochens nachbildenden Grundkörper und mit einem die Spongiosa des Knochens nachbildenden, in dem Grundkörper angeordneten Kern, **dadurch gekennzeichnet**, daß der Kern (1) aus einem harten Schaum ausgebildet ist.

2. Phantom nach Anspruch 1, **dadurch gekennzeichnet**, daß der Kern (1) die gleiche chemische Zusammensetzung aufweist wie der Grundkörper (6).

3. Phantom nach Anspruch 1 oder 2, **dadurch gekennzeichnet**, daß der Kern (1) aus einem Kunststoff ausgebildet ist, dem ein Röntgenkontrastmittel zugesetzt ist.

4. Phantom nach einem der Ansprüche 1 bis 3, **dadurch gekennzeichnet**, daß ein durch den Knochen verlaufender Nervenkanal (4) mit einem Röntgenkontrastmittel markiert ist.

5. Phantom nach einem der Ansprüche 1 bis 4, **dadurch gekennzeichnet**, daß ein röntgenopaker Faden (20, 22) einen durch den oder an dem Knochen verlaufenden Nerv (13, 21) nachbildet.

6. Phantom nach einem der Ansprüche 1 bis 5, **dadurch gekennzeichnet**, daß ein den Grundkörper (6) zumindest teilweise umgebender Mantel (9) aus Silikon eine den Knochen zumindest teilweise umgebende Schleimhaut nachbildet.

7. Phantom nach Anspruch 6, **dadurch gekennzeichnet**, daß in den Mantel (9) eine Gaze (23) eingebettet ist.

8. Phantom nach einem der Ansprüche 1 bis 7, **dadurch gekennzeichnet**, daß eine Kautschukschicht auf einer Innenoberfläche einer Ausnehmung in dem Grundkörper eine Knochenhöhlenschleimhaut, insbesondere eine Kiefernhöhlenschleimhaut, nachbildet.

9. Verfahren zur Herstellung eines Phantoms für die Simulation von chirurgischen Eingriffen an Knochen, insbesondere an Kieferknochen beim Einsetzen von Implantaten, mit einem die Kompakta des Knochens nachbildenden Grundkörper und mit einem die Spongiosa des Knochens nachbildenden, in dem Grundkörper angeordneten Kern, nach einem der Ansprüche 1 bis 8, **dadurch gekennzeichnet**, daß der Kern (1) aus einem Präpolymer unter Vakuum ausgehärtet wird, wobei das Präpolymer die gleiche chemische Zusammensetzung aufweist wie ein Präpolymer für den Grundkörper (6), der unter einem höheren Druck ausgehärtet wird.

10. Verfahren nach Anspruch 9, **dadurch gekennzeichnet**, daß der Grundkörper (6) in zwei Schritten (5, 7) gegossen wird, wobei in einem zweiten Schritt ein zweiter Teil (7) des Grundkörpers an einen ersten Teil des Grundkörpers (5) und den darauf angeordneten Kern (1) angegossen wird.
